# EUROPEAN PATENT APPLICATION

(11) **EP 2 955 612 A1**
(43) Date of publication of application: **16.12.2015**
(21) Application number: 14180826.1
(22) Date of filing: 13.08.2014
(51) Int. Cl.: G06F 3/044, G06F 3/047, G02F 1/1333

(54) **Touch display device and touch substrate**

(30) Priority: 11.06.2014 TW 103120195
(71) Applicant: InnoLux Corporation, Chu-Nan, Miao-Li 350 (TW)
(72) Inventor: Chen, Chih-Chang, 350 Miao-Li County (TW); Hsu, Wei-Ting, 350 Miao-Li County (TW); Chen, Yang-Chen, 350 Miao-Li County (TW); Chang, Chia-Hsiung, 350 Miao-Li County (TW)
(74) Representative: Von Kreisler Selting Werner - Partnerschaft von Patentanwälten und Rechtsanwälten mbB

(57) **Abstract**

First touch patterns of a touch display device are disposed on a first substrate, and have bridge units and first electrode portions. The first electrode portions are disposed spaced from each other. The bridge units are connected with adjacent two of the first electrode portions. A second substrate is disposed opposite to the first substrate. A liquid crystal layer is disposed between the first substrate and the second substrate. One of the bridge units has two first portions, a second portion and two third portions. The first portions are located on the first electrode portions, and directly contact with the first electrode portions. The third portions are located on two of the first portions, and the second portion is located between two of the third portions. The first portion has a first width, and the second portion has a second width smaller than the first width.

## Description

### BACKGROUND

### Technical Field

The invention relates to a touch display device and a touch substrate.

### Related Art

With the advancing technology, the touch technology has been widely applied to various electronic products. For the touch display device, the user can execute various functions by touching the touch display device, so that the operation complexity of the user can be simplified, and the touch display device becomes more and more popular.

The touch display device may be typically an out-cell touch device or an on-cell touch device. In the aspect of the out-cell touch device, a touch sensing circuit is formed on a substrate, which is then combined with a display panel to form a touch display panel. In the aspect of the on-cell touch device, the touch sensing circuit is directly formed on a light-permeable substrate, such as a color filter substrate, and is combined with a thin film transistor substrate to form a touch display panel (a liquid crystal layer may be interposed therebetween).

A conventional touch sensing circuit includes a plurality of driving electrodes and a plurality of sensing electrodes. The driving electrodes may be interlaced with but electrically insulated from the sensing electrodes. In order to make the driving electrodes be interlaced with but electrically insulated from the sensing electrodes, a conventional way is to use a metal layer, having a smaller impedance, to cross over the touch electrodes so that two adjacent sensing electrodes are electrically connected with each other through the metal layer. If the bridging metal layer has the larger overall line width, then the RC loading of the sensing electrode is made smaller and less likely affects the signal transmission. However, because the metal layer is typically made of an opaque material, the visibility of the touch display device is affected. In addition, the smaller overall line width of the bridging metal layer less likely affects the visibility of the touch display device, but would increase the RC loading of the sensing electrode to affect the signal transmission.

### SUMMARY

An objective of the invention is to provide a touch display device and a touch substrate, wherein the problems, such as an the visibility and the RC loading, in the touch display device and the touch substrate can be balanced, and the better impedance matching effect can be achieved.

To achieve the above objective, the present invention discloses a touch display device including a first substrate, a plurality of first touch patterns, a second substrate and a liquid crystal layer. The first touch patterns are disposed on the first substrate and have a plurality of bridge units and a plurality of first electrode portions. The first electrode portions are disposed spaced from each other, and the bridge units are connected with adjacent two of the first electrode portions. The second substrate is disposed opposite to the first substrate. The liquid crystal layer is disposed between the first substrate and the second substrate. One of the bridge units has two first portions, a second portion and two third portions. The first portions are located on the first electrode portions and directly contact with the first electrode portions. The third portions are located between two of the first portions, and the second portion is located between two of the third portions. The first portion has a first width, and the second portion has a second width. The first width is greater than the second width.

To achieve the above objective, the present invention also discloses a touch substrate including a substrate and a plurality of first touch patterns. The first touch patterns are disposed on the substrate, and have a plurality of bridge units and a plurality of first electrode portions. The first electrode portions are disposed spaced from each other, and the bridge units are connected with adjacent two of the first electrode portions. One of the bridge units has two first portions, a second portion and two third portions. The first portions are located on the first electrode portions and directly contact with the first electrode portions. The third portions are located between two of the first portions, and the second portion is located between two of the third portions. The first portion has a first width, and the second portion has a second width. The first width is greater than the second width.

In one embodiment, the touch display device further includes a plurality of second touch patterns and a plurality of insulation units. The second touch patterns are disposed on the first substrate and electrically insulated from the first touch patterns, and have a plurality of connection portions and a plurality of second electrode portions. The second electrode portions are disposed spaced from each other, and the second electrode portions are disposed spaced from and interlaced with the first electrode portions. One of the connection portions is connected with adjacent two of the second electrode portions. The insulation units are correspondingly disposed on the connection portions, and the bridge units are disposed on the insulation units.

In one embodiment, the first electrode portions and the second electrode portions are disposed on the same layer of structure.

In one embodiment, the first touch patterns are disposed interlaced with the second touch patterns, respectively.

In one embodiment, the second portion is located on the insulation unit.

In one embodiment, the first portion has a first length, and the second portion has a second length. The second length is greater than the first length.

In one embodiment, the third portion has a third length in a direction substantially parallel with the first length, the first length is greater than the third length.

In one embodiment, the second length is greater than total sum of a sum of the first lengths and a sum of the third lengths.

In one embodiment, an angle is formed between the third portion and the first electrode portion, and the angle ranges from 15 to 40 degrees.

In one embodiment, in a direction perpendicular to the first substrate, the first portion has at least one arc shape.

In one embodiment, the first touch patterns and the second touch patterns are located on one side of the first substrate away from the second substrate.

In one embodiment, the touch display device further includes a third substrate located between the first substrate and the second substrate, and the liquid crystal layer is interposed between the second substrate and the third substrate. The first touch patterns and the second touch patterns are located on one side of the first substrate facing the third substrate.

As mentioned above, in the touch display device and the touch substrate of the invention, the first touch patterns are disposed on the first substrate, and have a plurality of bridge units and a plurality of first electrode portions, wherein the first electrode portions are disposed spaced from each other, the bridge units are connected with adjacent two of the first electrode portions, one of the bridge units has two first portions, a second portion and two third portions, the first portions are located on the first electrode portions and directly contact with the first electrode portions, the third portions are located between two of the first portions, the second portion is located between two of the third portions, the first portion has a first width, the second portion has a second width, and the first width is greater than the second width. Thus, the problems, such as the visibility and the RC loading, in the touch display device and the touch substrate can be balanced through the design of different widths of the bridge units, and the better impedance matching effect can be obtained. For example, in one embodiment, the bridge unit has two first portions, a second portion and two third portions. The second width of the second portion is smaller so that the touch display device and the touch substrate have the higher visibility, and the first width of the first portion is larger so that the RC loading of the first touch patterns can be decreased. In addition, the connection width between the third portion and the first portion is greater than the connection width between the third portion and the second portion so that the first touch patterns achieve the better impedance matching effect.

### BRIEF DESCRIPTION OF THE DRAWINGS

The embodiments will become more fully understood from the detailed description and accompanying drawings, which are given for illustration only, and thus are not limitative of the present invention, and wherein:
FIG. 1A is a schematic view showing a touch display device according to a preferred embodiment of the invention;
FIG. 1B is a schematically cross-sectional view showing the touch display device;
FIG. 1C is a schematic top view showing a touch substrate of FIG. 1B;
FIG. 1D is a schematically cross-sectional view taken along a straight line A-A in the touch substrate of FIG. 1C;
FIG. 1E is a schematic top view of FIG. 1D;
FIGS. 1F and 1G are schematic top views showing touch substrates of different embodiments; and
FIG. 2 is a schematically cross-sectional view showing a touch display device according to another embodiment of the invention.

### DETAILED DESCRIPTION OF THE INVENTION

The embodiments of the invention will be apparent from the following detailed description, which proceeds with reference to the accompanying drawings, wherein the same references relate to the same elements.

The present invention will be apparent from the following detailed description, which proceeds with reference to the accompanying drawings, wherein the same references relate to the same elements. All drawings of the embodiments of the invention are only for the illustrative purpose only, and do not intend to represent the true size and scale.

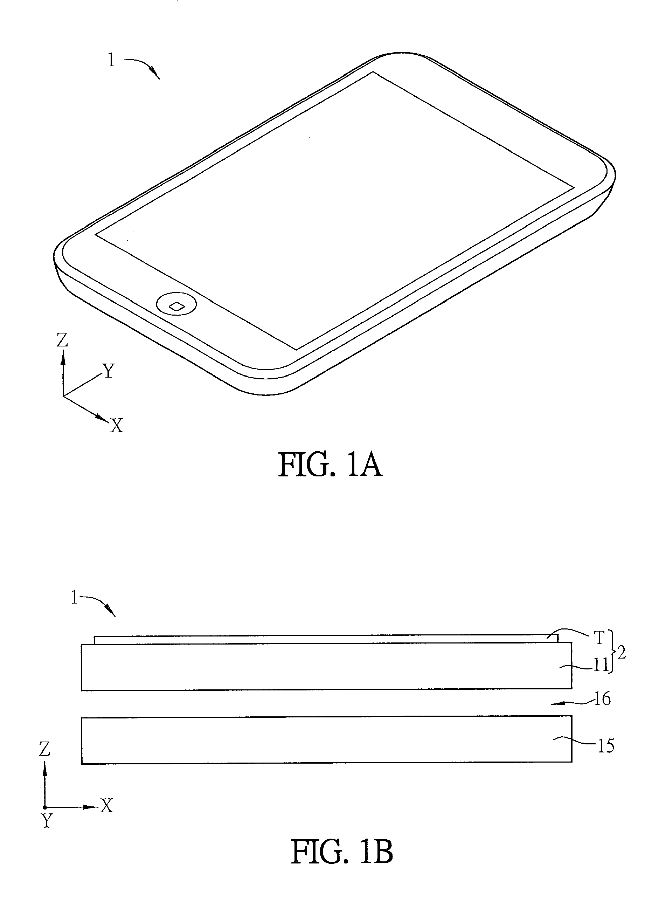

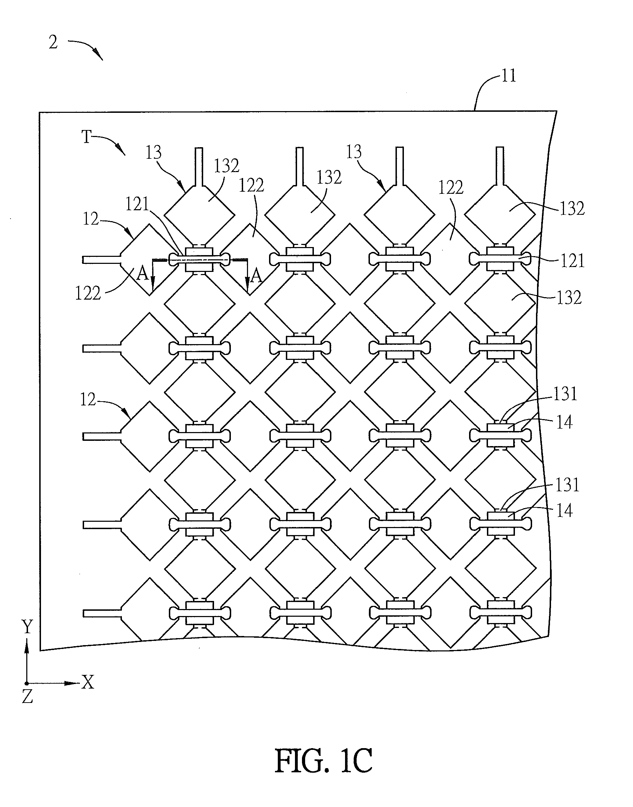

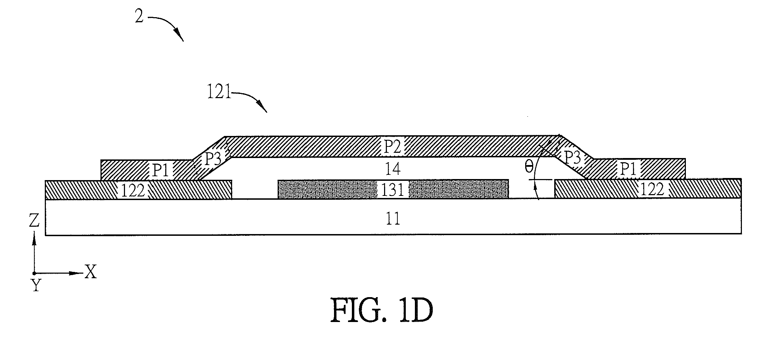

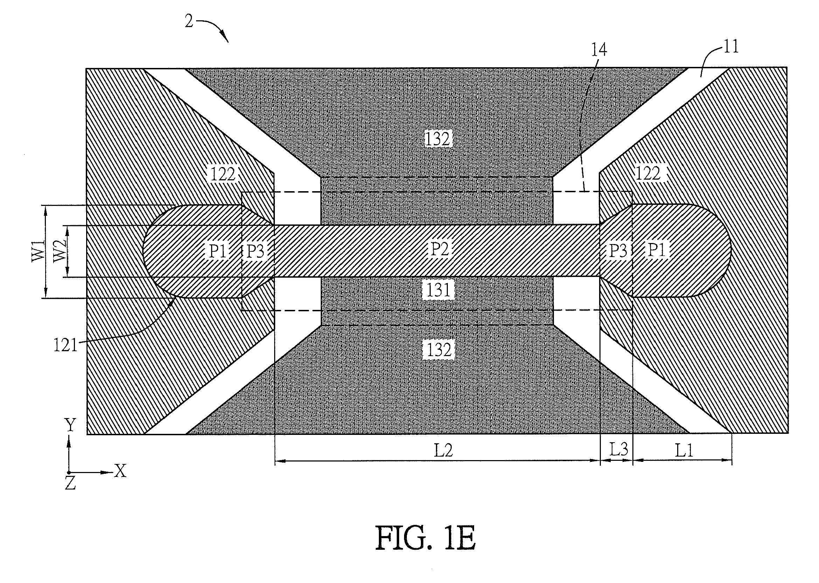

FIG. 1A is a schematic view showing a touch display device 1 according to a preferred embodiment of the invention. FIG. 1B is a schematically cross-sectional view showing the touch display device 1. FIG. 1C is a schematic top view showing a touch substrate 2 of FIG. 1B. FIG. 1D is a schematically cross-sectional view taken along a straight line A-A in the touch substrate 2 of FIG. 1C. FIG. 1E is a schematic top view of FIG. 1D.

For the sake of illustration, this embodiment shows a first direction X, a second direction Y and a third direction Z substantially perpendicular to one another. However, the invention is not restricted thereto. In other embodiments, the included angle between the first direction X and the second direction Y may also be unequal to 90 degrees. In addition, the touch display device 1 of this embodiment is, for example but without limitation to, a smart mobile phone. In other embodiments, however, the touch display device 1 may also be a tablet computer, an ultra-thin notebook computer, a global positioning system (GPS) or any other electronic touch device. In addition, the touch display device 1 may be an out-cell touch display device or an on-cell touch display device. Herein, the on-cell touch display device is described as an example.

Referring to FIGS. 1A to 1C, the touch display device 1 includes a first substrate 11, a plurality of first touch patterns 12, a plurality of second touch patterns 13, a plurality of insulation units 14, a second substrate 15 and a liquid crystal layer 16. The first touch patterns 12, the second touch patterns 13 and the insulation units 14 are disposed on the first substrate 11 to form a touch substrate 2, and the first touch patterns 12, the second touch patterns 13 and the insulation units 14 constitute a touch pattern layer T.

The first substrate 11 is disposed opposite to the second substrate 15, and the liquid crystal layer 16 is disposed between the first substrate 11 and the second substrate 15. The first substrate 11 and the second substrate 15 may be made of a light-permeable material, and may be, for example but without limitation to, a glass substrate, a quartz substrate or a plastic substrate. In addition, the touch display device 1 may further include a thin film transistor array and a color filter array (not shown). The thin film transistor array is disposed on the second substrate 15, and the color filter array may be disposed on the first substrate 11 or the second substrate 15. In this embodiment, the thin film transistor array is disposed on one side of the second substrate 15 facing the first substrate 11, and the color filter array is disposed on one side of the first substrate 11 facing the second substrate 15. In other embodiment, however, a black matrix layer and a filter layer of the color filter array may also be disposed on the second substrate 15, so that it becomes a BOA (BM on array) substrate, or a COA (color filter on array) substrate, but the invention is not restricted thereto. In addition, the touch display device 1 may further include a backlight module (not shown). The backlight module is disposed on one side of the second substrate 15 away from the first substrate 11. When the light emitted from the backlight module passes through the second substrate 15, the thin film transistor array, the liquid crystal layer 16, the color filter array and the first substrate 11, and the image can be displayed through a plurality of pixels formed.

In addition, in the touch substrate 2, the first touch patterns 12, the second touch patterns 13 and the insulation units 14 are located on one side of the first substrate 11 away from the second substrate 15 (the upper side surface of the first substrate 11). The first touch patterns 12 and the second touch patterns 13 may be touch sensing circuits (i.e., driving electrodes Tx and sensing electrodes Rx), and are formed on the external side surface of the first substrate 11. The materials of the first touch pattern 12 and the second touch pattern 13 may include, for example but without limitation to, a transparent electroconductive material, such as indium tin oxide (ITO), indium zinc oxide (IZO), aluminum zinc oxide (AZO), cadmium tin oxide (CTO), tin oxide (SnO₂), zinc oxide (ZnO) or the like, or include a metal material. The material of the insulation unit 14 may be, for example but without limitation to, silicon oxide (SiOx), silicon nitride (SiNx), or the like.

In the following, the structure of the touch substrate 2 will be described in detail with reference to FIGS. 1C to 1E.

The first touch patterns 12 of the touch substrate 2 have a plurality of bridge units 121 and a plurality of first electrode portions 122, and the first electrode portions 122 are disposed spaced from each other. In addition, the bridge units 121 are connected with adjacent two of the first electrode portions 122, respectively. In this embodiment, the first electrode portions 122 are disposed from each other in the first direction X, and two adjacent first electrode portions 122 are electrically connected with each other through one bridge unit 121. Thus, as shown in FIG. 1C, a plurality of first electrode portions 122 are connected with a plurality of bridge units 121 to constitute a first touch pattern 12, and the first touch patterns 12 are disposed spaced from each other in the second direction Y. In this embodiment, the material of the first electrode portion 122 is ITO, and the bridge unit 121 is made of the metal material.

The second touch patterns 13 are interlaced with and electrically insulated from the first touch patterns 12, respectively. The second touch patterns 13 have a plurality of connection portions 131 and a plurality of second electrode portions 132. The second electrode portions 132 are disposed spaced from each other, and the second electrode portions 132 are disposed spaced from and interlaced with the first electrode portions 122. In addition, one of the connection portions 131 is connected with adjacent two of the second electrode portions 132. In this embodiment, the first electrode portions 122 and the second electrode portions 132 are disposed on the same layer of structure. The second touch patterns 13 are disposed spaced from each other in the first direction X, and the second touch patterns 13 are interlaced with the first touch patterns 12. The first touch patterns 12 are also interlaced with the second touch patterns 13. In addition, the second electrode portions 132 are disposed spaced from each other in the second direction Y, and each connection portion 131 is connected with two adjacent second electrode portions 132.

The insulation units 14 are correspondingly disposed on the connection portions 131, and the bridge units 121 are disposed on the insulation units 14. At least one of the bridge units 121 has a width different from the other bridge units 121. In this embodiment, the bridge units 121 cross over the insulation units 14 and are electrically connected with two adjacent first electrode portions 122. Each bridge unit 121 extends in the first direction X, and has a different width on the cross-section area of the second direction Y. It is to be further noted that although the extending directions of the first touch patterns 12 and the second touch patterns 13 of FIG. 1C are substantially perpendicular to each other, the extending directions thereof are not restricted to only the perpendicular condition, and may be adjusted according to different conditions. In addition, although the first electrode portion 122 and the second electrode portion 132 are rhombuses, they may also have other shapes, such as circular, elliptic, triangular, rectangular, square or another other shape.

As shown in FIGS. 1D and IE, one of the bridge units 121 has two first portions P1, a second portion P2 and two third portions P3, wherein the first portions P1 are located on the first electrode portions 122, and are directly contact with and electrically connected with the first electrode portions 122. The second portion P2 is located on the insulation unit 14, and the third portions P3 are located between two of the first portions P1, and the second portion P2 is located between two of the third portions P3, so that the first portion P1 is connected with the second portion P2 through the third portion P3 to constitute the bridge units 121. In this embodiment, each bridge unit 121 has two first portions P1, a second portion P2 and two third portions P3, the shape of the second portion P2 is, for example, a square, and the shape of the third portion P3 is, for example, a trapezoid. In addition, the first portion P1 has at least one arc shape in the direction perpendicular to the first substrate 11 (i.e., on view of the third direction Z). In this embodiment, each first portion P1 has two arc shapes. With the design of the arc shape of the first portion P1, the issue of the electrostatic discharge of the bridge unit 121 may be decreased.

The length of the first portion P1 in the first direction X may range from 30 to 45 microns (µm), and the length of the third portion P3 in the first direction X may range from 1.1 to 7.5 microns (µm). In addition, two first portions P1 or two third portions P3 may have the same length or different lengths in the first direction X. Herein, two first portions P1 have the same length in the first direction X, and two second portions P2 also have the same length in the first direction X. In addition, the first portion P1 has a first width W1 in the second direction Y, the second portion P2 has a second width W2 in the second direction Y, and the first width W1 is different from the second width W2. In this embodiment, the first width W1 is greater than the second width W2 (W1>W2). In other words, the connection width between the third portion P3 and the first portion P1 is greater than the connection width between the third portion P3 and the second portion P2.

In addition, the first portion P1 of this embodiment has a first length L1 in the first direction X, the second portion P2 has a second length L2 in the first direction X, and the second length L2 is greater than the first length L1 (L2>L1). In addition, the third portion P3 has a third length L3 in the direction substantially parallel to the first length L1 (i.e., in the first direction X), and the first length L1 is greater than the third length L3 (L1>L3). Thus, L2>L1>L3 is established in this embodiment. In addition, the second length L2 is greater than the total sum of the sum of the first lengths L1 and the sum of the third lengths L3, that is, L2>[(L1+L1) + (L3+L3)]. In addition, as shown in FIG. 1D, an angle *θ* is formed between the third portion P3 and the first electrode portion 122, and the angle *θ* may range from 15 to 40 degrees.

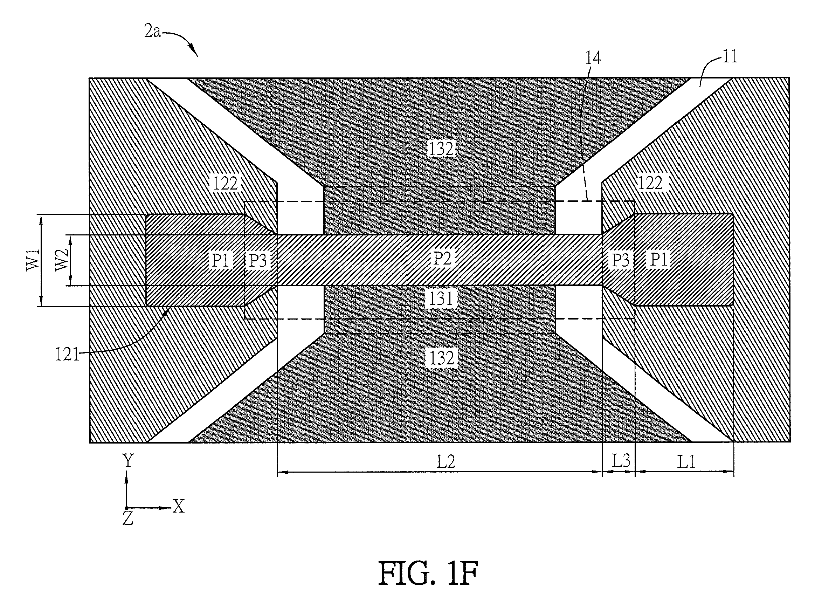

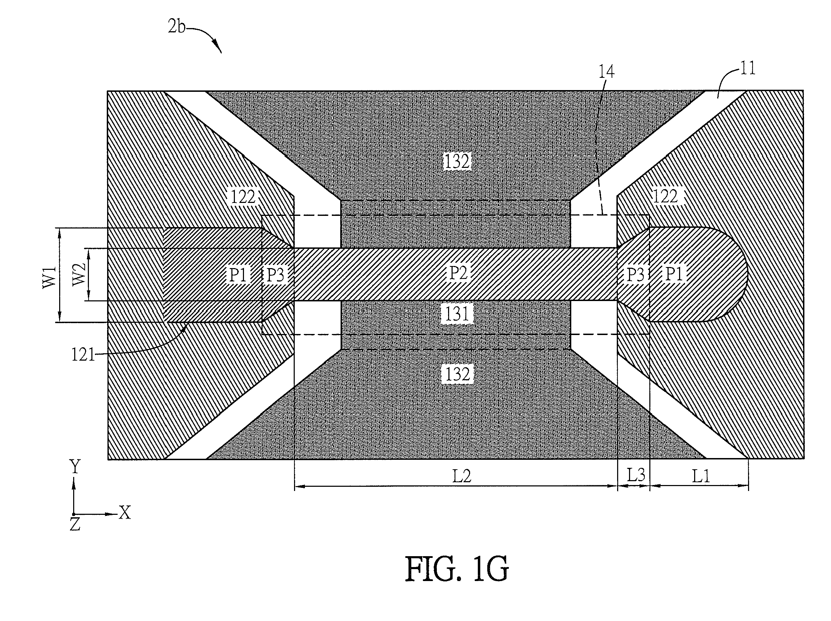

FIGS. 1F and 1G are schematic top views showing touch substrates 2a, 2b according to different embodiments.

As shown in FIG. 1F, the main difference between this embodiment and the touch substrate 2 resides in that the shape of the top view of each of the two first portions P1 in the touch substrate 2a of this embodiment is rectangular.

In addition, as shown in FIG. 1G, the main difference between this embodiment and the touch substrate 2 resides in that the shape of the top view of one of the two first portions P1 in the touch substrate 2b of this embodiment is rectangular, and the shape of the top view of the other one of the two first portions P1 is an arc.

In addition, the other technical features of the touch substrates 2a, 2b may be obtained from the elements the same as those of the touch substrate 2, and detailed descriptions thereof will be omitted.

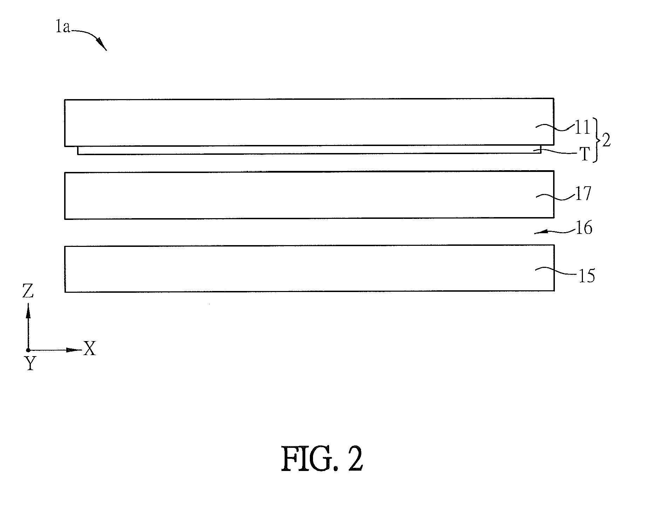

FIG. 2 is a schematically cross-sectional view showing a touch display device 1a according to another embodiment of the invention.

The main difference between this embodiment and the touch display device 1 resides in that the touch display device 1a of this embodiment may further include a third substrate 17. The third substrate 17 is located between the first substrate 11 (or the touch substrate 2) and the second substrate 15, and the liquid crystal layer 16 is interposed between the second substrate 15 and the third substrate 17. The touch pattern layer T constituted by the first touch patterns 12, the second touch patterns 13 and the insulation units 14 is located on one side of the first substrate 11 facing the third substrate 17. Herein, the touch display device 1a of this embodiment is the out-cell touch display device. The first substrate 11 is, for example, a glass substrate, and the touch pattern layer T may be directly formed on the inner side surface of the first substrate 11. In addition, the third substrate 17 is a color filter substrate including a color filter array, for example, and the second substrate 15 is a thin film transistor substrate including a thin film transistor array, for example. In this embodiment, the first substrate 11 is a protection cover lens. Nevertheless, in another embodiment, another protection substrate may further be disposed on the first substrate 11, and the invention is not particularly restricted thereto.

In addition, the other technical features of the touch display device 1a may be obtained from the elements the same as those of the touch display device 1, and detailed descriptions thereof will be omitted.

It is to be further noted that, in different embodiments, the touch substrate 2 of FIG. 2 may also be replaced by the touch substrate 2a or 2b to obtain touch display devices according to different embodiments.

In summary, in the touch display device and the touch substrate of the invention, the first touch patterns are disposed on the first substrate, and have a plurality of bridge units and a plurality of first electrode portions, wherein the first electrode portions are disposed spaced from each other, the bridge units are connected with adjacent two of the first electrode portions, one of the bridge units has two first portions, a second portion and two third portions, the first portions are located on the first electrode portions and directly contact with the first electrode portions, the third portions are located between two of the first portions, the second portion is located between two of the third portions, the first portion has a first width, the second portion has a second width, and the first width is greater than the second width. Thus, the problems, such as the visibility and the RC loading, in the touch display device and the touch substrate can be balanced through the design of different widths of the bridge units, and the better impedance matching effect can be obtained. For example, in one embodiment, the bridge unit has two first portions, a second portion and two third portions. The second width of the second portion is smaller so that the touch display device and the touch substrate have the higher visibility, and the first width of the first portion is larger so that the RC loading of the first touch patterns can be decreased. In addition, the connection width between the third portion and the first portion is greater than the connection width between the third portion and the second portion so that the first touch patterns achieve the better impedance matching effect.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A touch display device, comprising:
a first substrate;
a plurality of first touch patterns, which are disposed on the first substrate and have a plurality of bridge units and a plurality of first electrode portions, wherein the first electrode portions are disposed spaced from each other, and the bridge units are connected with adjacent two of the first electrode portions;
a second substrate disposed opposite to the first substrate; and
a liquid crystal layer disposed between the first substrate and the second substrate,
wherein one of the bridge units has two first portions, a second portion and two third portions, wherein the first portions are located on the first electrode portions and directly contact with the first electrode portions, the third portions are located between two of the first portions, the second portion is located between two of the third portions, the first portion has a first width, the second portion has a second width, and the first width is greater than the second width.

2. The touch display device according to claim 1, further comprising:
a plurality of second touch patterns, which are disposed on the first substrate and electrically insulated from the first touch patterns, and have a plurality of connection portions and a plurality of second electrode portions, wherein the second electrode portions are disposed spaced from each other, the second electrode portions are disposed spaced from and interlaced with the first electrode portions, and one of the connection portions is connected with adjacent two of the second electrode portions; and
a plurality of insulation units correspondingly disposed on the connection portions, wherein the bridge units are disposed on the insulation units.

3. The touch display device according to claim 2, wherein the second portion is located on the insulation unit.

4. The touch display device according to claim 1, wherein the first portion has a first length, the second portion has a second length, and the second length is greater than the first length.

5. The touch display device according to claim 1, wherein the third portion has a third length in a direction substantially parallel with the first length, the first length is greater than the third length, and the second length is greater than total sum of a sum of the first lengths and a sum of the third lengths.

6. The touch display device according to claim 1, wherein an angle is formed between the third portion and the first electrode portion, and the angle ranges from 15 to 40 degrees.

7. The touch display device according to claim 1, wherein in a direction perpendicular to the first substrate, the first portion has at least one arc shape.

8. The touch display device according to claim 2, wherein the first touch patterns and the second touch patterns are located on one side of the first substrate away from the second substrate.

9. The touch display device according to claim 2, further comprising:
a third substrate located between the first substrate and the second substrate, wherein the liquid crystal layer is interposed between the second substrate and the third substrate, and the first touch patterns and the second touch patterns are located on one side of the first substrate facing the third substrate.

10. A touch substrate, comprising:
a substrate; and
a plurality of first touch patterns, which are disposed on the substrate, and have a plurality of bridge units and a plurality of first electrode portions, wherein the first electrode portions are disposed spaced from each other, and the bridge units are connected with adjacent two of the first electrode portions,
wherein one of the bridge units has two first portions, a second portion and two third portions, the first portions are located on the first electrode portions and directly contact with the first electrode portions, the third portions are located between two of the first portions, the second portion is located between two of the third portions, the first portion has a first width, the second portion has a second width, and the first width is greater than the second width.

11. The touch substrate according to claim 10, further comprising:
a plurality of second touch patterns, which are disposed on the substrate and electrically insulated from the first touch patterns, and have a plurality of connection portions and a plurality of second electrode portions, wherein the second electrode portions are disposed spaced from each other, the second electrode portions are disposed spaced from and interlaced with the first electrode portions, and one of the connection portions is connected with adjacent two of the second electrode portions; and
a plurality of insulation units correspondingly disposed on the connection portions, wherein the bridge units are disposed on the insulation units.

12. The touch substrate according to claim 11, wherein the second portion is located on the insulation unit.

13. The touch substrate according to claim 10, wherein the first portion has a first length, the second portion has a second length, and the second length is greater than the first length.

14. The touch substrate according to claim 10, wherein the third portion has a third length in a direction substantially parallel with the first length, the first length is greater than the third length, and the second length is greater than total sum of a sum of the first lengths and a sum of the third lengths.

15. The touch substrate according to claim 10, wherein in a direction perpendicular to the substrate, the first portion has at least one arc shape.
